# EUROPEAN PATENT APPLICATION

(11) **EP 3 203 778 A1**
(43) Date of publication of application: **09.08.2017**
(21) Application number: 15776983.7
(22) Date of filing: 17.03.2015
(51) Int. Cl.: H04W 36/26

(54) **CHANNEL SWITCHING METHOD AND DEVICE, BASE STATION**

(30) Priority: 29.09.2014 CN 201410513861
(71) Applicant: ZTE Corporation, Shenzhen City, Guangdong Province 518057 (CN)
(72) Inventor: ZHANG, He, Shenzhen Guangdong 518057 (CN)
(74) Representative: Lavoix
(86) International application number: PCT/CN2015/074402
(87) International publication number: WO 2015/154610

(57) **Abstract**

The disclosure discloses a channel switching method and device. The method includes that: current state information of a terminal is acquired; a current state of the terminal is confirmed according to the current state information of the terminal; and it is determined whether to issue a switching command according to the current state of the terminal. The disclosure also discloses a channel switching device. The device includes: an information acquiring module, which is configured to acquire current state information of a terminal; a state confirming module, which is configured to confirm a current state of the terminal according to the current state information of the terminal; a switching determining module, which is configured to determine whether to issue a switching command according to the current state of the terminal. The disclosure also discloses a base station for channel switching.

## Description

### TECHNICAL FIELD

The disclosure relates to channel switching in a Global System for Mobile Communications (GSM) system, and in particular to a method for improving the quality of a channel switching process.

### BACKGROUND

It has been a pursuit for the wireless communication field to obtain high-quality voice communication while maximizing system capacity.

A service area of the GSM system is composed of continuous cells. In order to enable a user in a call during movement to obtain a continuous service and make the network performance better, the GSM adopts switching technology to achieve the above purposes.

Switching means a process in which a mobile user changes service channels during the call (namely switching from a traffic channel to another traffic channel). The GSM system switching is a typical hard switching, and there will be the loss of voice information in the switching process, thereby influencing the quality and Mean Opinion Score (MOS) value of voice received by the user.

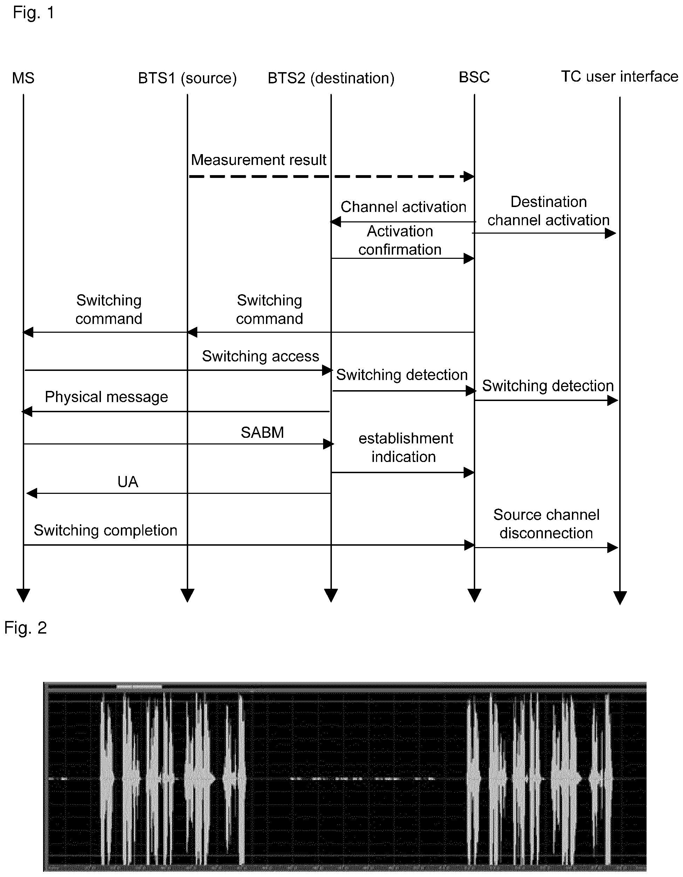

During the call, a Base Station Controller (BSC) of the GSM system decides whether to perform switching according to measurement results (such as level and wireless quality, and so on) of the base station, and if it is decided to perform switching, the BSC issues through the base station a switching command to a terminal, and the base station transmits, in a frame stealing way which sacrifices voice frames, the signalling and subsequent physical message, Set Asynchronous Balanced Mode (SABM) frame, Unnumbered Acknowledge (UA) frame, switching completion (or switching failure) and other signalling, until the switching is completed or failed. The specific switching process of channel switching of the GSM system is shown in Fig. 1. In this process, each piece of interactive signalling is transmitted interactively in the frame stealing way which sacrifices the voice frames. So, there will be the loss of voice quality in this process, thereby influencing the voice sensing of users and the MOS value of network testing.

### SUMMARY

The embodiments of the disclosure disclose a method, device, and base station for channel switching, so as to reduce the loss of voice during switching and improve the voice quality.

To solve the above technical solution, an embodiment of the disclosure discloses a channel switching method, which includes that:
current state information of a terminal is acquired;
a current state of the terminal is confirmed according to the current state information of the terminal; and
it is determined whether to issue a switching command according to the current state of the terminal.

In one embodiment, the current state information of the terminal includes frame information of the current uplink and/or downlink channel of the terminal.

In one embodiment, that the current state of the terminal is confirmed includes that:
it is confirmed a type of an acquired frame of the current uplink and/or downlink channel of the terminal; and
when the frame of the uplink and/or downlink channel is a voice frame, the frame is determined as an important frame, and a magnitude of a codebook gain of voice information contained in the frame is determined; when the codebook gain is greater than a pre-set threshold, the frame is determined as a key frame; when the code gain is less than or equal to the pre-set threshold, the frame is determined as a non-key frame.

In one embodiment, that it is determined whether to perform switching according to the current state of the terminal includes that:
if a pre-set number of consecutive frames of the terminal are unimportant frames or non-key frames, switching command information is issued to the terminal; or,
if pre-set time is reached, the switching command information is issued to the terminal.

An embodiment of the disclosure also discloses a channel switching device, which includes:
an information acquiring module, which is configured to acquire the current state information of the terminal;
a state confirming module, which is configured to confirm the current state of the terminal according to the current state information of the terminal; and
a switching determining module, which is configured to determine whether to issue the switching command according to the current state of the terminal.

In one embodiment, the information acquiring module is configured to:
acquire the frame information of the current uplink and/or downlink channel of the terminal.

In one embodiment, the state confirming module includes:
a frame information type determining submodule and a codebook gain determining submodule;
the frame information type determining submodule is configured to confirm the type of the frame of the current uplink and/or downlink channel of the terminal, and when the frame is the voice frame, determine the frame as the important frame; and
the codebook gain determining submodule is configured to determine the magnitude of the codebook gain of voice information in the important frame,
when the codebook gain is greater than the pre-set threshold, determine the frame as the key frame, and when the code gain is less than or equal to the pre-set threshold, determine the frame as the non-key frame.

In one embodiment, the switching determining module includes a counting submodule, a timing submodule and a judging submodule;
the counting submodule is configured to determine the number of obtained consecutive frames of the terminal;
the timing submodule is configured to determine whether the pre-set time is reached; and
the judging submodule is configured to judge whether the consecutive unimportant frames or non-key frames of the terminal reach the pre-set threshold of the number of consecutive frames;
if the consecutive unimportant frames or non-key frames of the terminal reach the pre-set threshold of the number of consecutive frames, the switching command information is issued to the terminal; or
if the pre-set time is reached, the switching command information is issued to the terminal.

An embodiment of the disclosure also discloses a base station for channel switching, which includes the channel switching device.

An embodiment of the disclosure also discloses a computer readable storage medium, in which a computer program is stored; the computer program includes a program instruction; when the program instruction is executed by the device of the base station, the device can perform the channel switching method.

The method, device, and the base station channel for switching disclosed by the embodiments of the disclosure can effectively reduce the loss of voice during switching, thereby improving the voice quality.

### BRIEF DESCRIPTION OF THE DRAWINGS

Fig. 1 is a flowchart of channel switching in the GSM system;
Fig. 2 is a waveform of a signal transmitted during a voice call in the GSM system;
Fig. 3 is a flowchart of a channel switching method according to an embodiment of the disclosure;
Fig. 4 is a flowchart of a channel switching method according to an exemplary embodiment of the disclosure;
Fig. 5 is a block diagram of a channel switching device according to an embodiment of the disclosure; and
Fig. 6 is a detailed block diagram of a channel switching device according to an embodiment of the disclosure.

### DETAILED DESCRIPTION

The embodiments of the disclosure are elaborated below in combination with the accompanying drawings. Note that, the embodiments in the disclosure and the features in the embodiments can be randomly combined with each other on the condition of no conflict. Besides, although a logical sequence is shown in the flowchart, in some cases, the presented or described steps can be performed in a sequence different from that described herein.

In the channel switching process of the GSM system, the initiation of switching is triggered by the BSC, and then the base station issues the switching command information to the terminal. Before issuing the switching command information, the base station can predict what state the terminal is in currently, then the base station can decide whether to issue the switching command information according to the current state information of the terminal.

A waveform of a signal that the terminal transmits during a voice call is shown in Fig. 2. The waveform of the signal has wave crests and troughs, which represent the amount and strength of voice information respectively. The base station can determine the state of the terminal according to the information like the amount and strength of uplink and downlink voice information, and further determine whether to trigger the whole switching flow.

The solution disclosed by an embodiment of the disclosure is: determining the state of the terminal according to the uplink and/or downlink voice information, so as to select the timing of issuing the switching command, reduce the loss of voice information, and improve the voice quality of users.

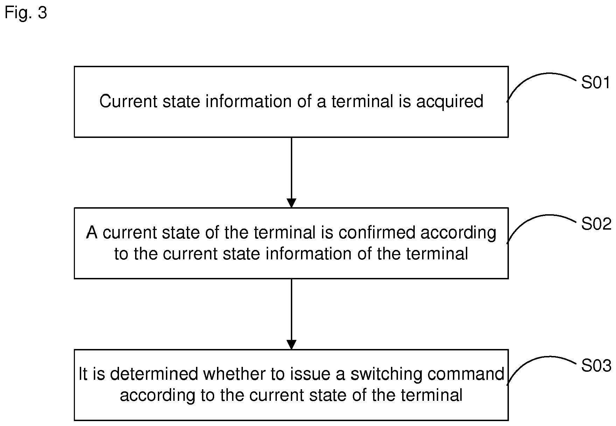

Fig. 3 is a flowchart of a channel switching method according to an embodiment of the disclosure. As shown in Fig. 3, the flow specifically includes the following steps:
S01: the current state information of the terminal is acquired;
S02: the current state of the terminal is confirmed according to the current state information of the terminal; and
S03: it is determined whether to issue the switching command according to the current state of the terminal.

The method disclosed by an embodiment of the disclosure is further elaborated below through the specific embodiments.

### Embodiment 1

S101: the base station acquires the frame information of the current uplink channel of the terminal;
S102: the base station determines the obtained frame information of the terminal. If the frame is a voice frame, it is determined as the important frame. If the frame is not a voice frame, it is determined as the unimportant frame. For the important frame, the codebook gain of voice information contained in the frame is further determined. If the codebook gain of voice information contained in the frame is less than or equal to 1, the frame is determined as the non-key frame, or else, it is determined as the key frame;
S103: if all three consecutive frames are the unimportant or non-key frames, the switching command information is issued to trigger the switching flow; or else, the switching command information is not issued. Alternatively, if there are no three consecutive frames that are unimportant frames during a certain period of time, for example, 3 seconds, the switching command information is issued immediately.

### Embodiment 2

S201: the base station acquires the frame information of the current downlink channel of the terminal;
S202: the base station determines the obtained frame information. If the frame is a voice frame, it is determined as the important frame. If the frame is not a voice frame, it is determined as the unimportant frame. For the important frame, the codebook gain of voice information contained in the frame is further determined. If the codebook gain of voice information contained in the frame is less than or equal to 1, the frame is determined as the non-key frame, or else, it is determined as the key frame.
S203: if all four consecutive frames are the unimportant or non-key frames, the switching command information is issued to trigger the switching flow; or else, the switching command information is not issued. Alternatively, if there are no four consecutive frames that are unimportant frames during a certain period of time, for example, 2.7 seconds, the switching command information is issued immediately.

### Embodiment 3

S301: the base station acquires the frame information of the current uplink and downlink channels of the terminal;
S302: the base station determines the obtained frame information. If the frame is a voice frame, it is determined as the important frame. If the frame is not a voice frame, it is determined as the unimportant frame. For the important frame, the codebook gain of voice information contained in the frame is further determined. If the codebook gain of voice information contained in the frame is less than or equal to 1, the frame is determined as the non-key frame, or else, it is determined as the key frame;
S303: if all three consecutive frames are the unimportant or non-key frames, the switching command information is issued to trigger the switching flow; or else, the switching command information is not issued. Alternatively, if there are no three consecutive frames that are unimportant frames after a certain period of time, for example, 3 seconds, the switching command information is issued immediately.

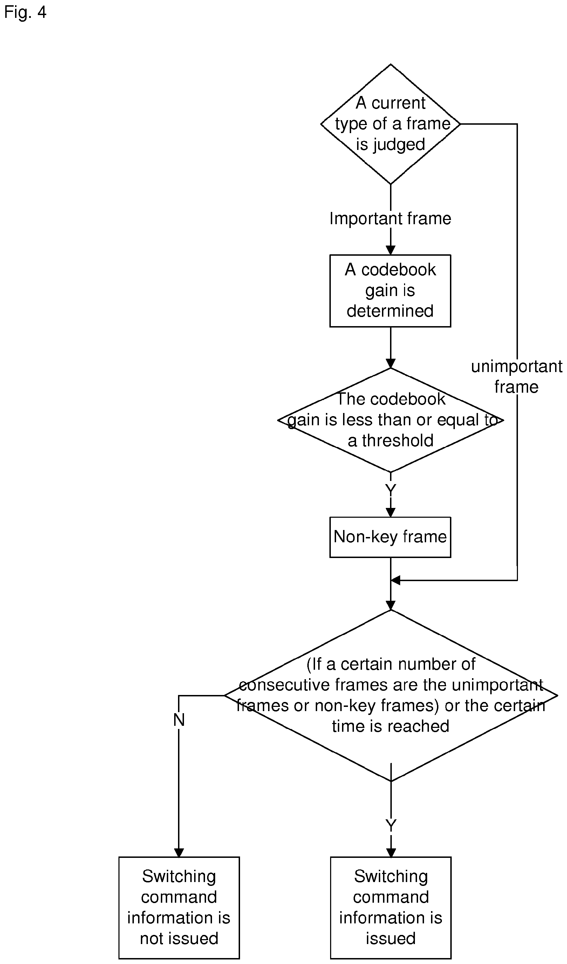

Fig. 4 is a flowchart of a channel switching method according to an exemplary embodiment of the disclosure. The specific steps described from embodiment 1 to embodiment 3 refer to Fig. 4.

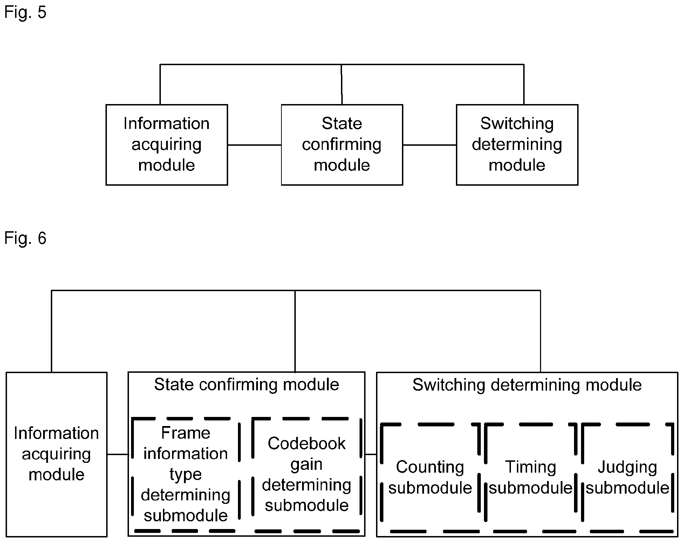

An embodiment of the disclosure also provides a channel switching device, as shown in Fig. 5 and Fig. 6. The device includes a processor, a program storage device and a data storage device. The device further includes:
an information acquiring module, which is configured to acquire the current state information of the terminal;
a state confirming module, which is configured to confirm the current state of the terminal according to the current state information of the terminal; and
a switching determining module, which is configured to determine whether to issue the switching command according to the current state of the terminal.

As shown in Fig. 6, the information acquiring module is specifically configured to acquire the frame information of the current uplink and/or downlink channel of the terminal.

The state confirming module includes a frame information type determining submodule and a codebook gain determining submodule. The frame information type determining submodule is configured to confirm the type of the frame of the current uplink and/or downlink channel of the terminal. When the frame is a voice frame, the frame is determined as the important frame, and when the frame is not a voice frame, the frame is determined as the unimportant frame.

The codebook gain determining submodule is configured to determine the magnitude of the codebook gain of voice information contained in the important frame. When the codebook gain of voice information contained in the frame is less than or equal to 1, the frame is determined as the non-key frame, or else, the frame is determined as the key frame.

As shown in Fig. 6, the switching determining module includes a counting submodule, a timing submodule and a judging submodule.
the counting submodule is configured to determine the number of consecutive frames of the uplink and/or downlink channel of the terminal;
the timing submodule is configured to determine whether the pre-set time is reached; and
the judging submodule is configured to judge whether the consecutive frames of the terminal reach the pre-set threshold of the number;
if the pre-set number of consecutive frames of the terminal are unimportant frames or non-key frames, the switching command information is issued to the terminal; or
if the pre-set time is reached, and there are no the pre-set number of consecutive frames that are unimportant frames or non-key frames in the terminal, the switching command information is also issued to the terminal.

An embodiment of the disclosure also provides a base station for channel switching, and the base station includes the channel switching device.

According to the method and device for channel switching provided by embodiments of the disclosure, when the BSC initiates switching, the base station first acquires the information of the current uplink and downlink frames of the terminal; if it is determined that the terminal is in a voice communication state, the base station can issue the switching command information to the terminal when the codebook gain of voice information is small; or if the terminal is in the voice communication state but the codebook gain is large, the base station issues the switching command information to the terminal only after the pre-set waiting time is reached, so as to select the timing of issuing the switching command, reduce the loss of voice information as much as possible, and improve the voice quality of users.

Those skilled in the art should appreciate that the embodiments of the disclosure can be provided as a method, a system or a computer program product. So, this disclosure can adopt the forms of full hardware embodiment, full software embodiment, or embodiment combining software and hardware. Besides, this disclosure can adopt the form of a computer program product which is implemented on one or more computer available storage media including computer available program codes. The storage media include, but are not limited to, a magnetic disk memory, an optical memory, and so on.

This disclosure is described according to the flowcharts and/or block diagrams of the method and the computer program product in the embodiments of this disclosure. It should be understood that each flow and/or block in the flowchart and/or block diagram, and the combination of the flow and/or block in the flowchart and/or block diagram can be implemented by the computer program instructions. These computer program instructions can be provided to the processing unit of the general-purpose computer, the special-purpose computer, the embedded processor or other programmable data processing equipment to generate a machine, so that instructions which are executed by the processing unit of the computer or other programmable data processing equipment generate the device which is used for implementing the specified functions in one or more flows of the flowchart and/or one or more blocks of the block diagram.

These computer program instructions can also be stored in the computer-readable memory which can guide the computer or other programmable data processing equipment to work in a particular way, so that the instructions stored in the computer-readable memory generate the product including the instruction device. The instruction device implements the specified functions in one or more flows of the flowchart and/or one or more blocks of the block diagram.

These computer program instructions can also be loaded on the computer or other programmable data processing equipment, so that a series of operation steps are performed on the computer or other programmable data processing equipment to generate the processing implemented by the computer, and the instructions executed on the computer or other programmable data processing equipment provide the steps for implementing the specified functions in one or more flows of the flowchart and/or one or more blocks of the block diagram.

The above is only the preferred embodiments of the disclosure and not intended to limit the scope of the disclosure.

### INDUSTRIAL APPLICABILITY

According to the method and device for channel switching in embodiments of the disclosure, when the BSC initiates switching, the base station selects the timing of issuing the switching command according to the obtained information of the current uplink and downlink frames of the terminal, so as to reduce the loss of voice information, and improve the voice quality of users.

## Claims

1. A channel switching method, comprising:
acquiring current state information of a terminal;
confirming a current state of the terminal according to the current state information of the terminal; and
determining whether to issue a switching command according to the current state of the terminal.

2. The method according to claim 1, wherein the current state information of the terminal comprises frame information of the current uplink and/or downlink channel of the terminal.

3. The method according to claim 2, wherein confirming the current state of the terminal comprises:
confirming a type of an acquired frame of the current uplink and/or downlink channel of the terminal; and
when the frame of the uplink and/or downlink channel is a voice frame, determining the frame as an important frame, and determining a magnitude of a codebook gain of voice information contained in the frame; when the codebook gain is greater than a pre-set threshold, determining the frame as a key frame; when the code gain is less than or equal to the pre-set threshold, determining the frame as a non-key frame.

4. The method according to claim 3, wherein determining whether to issue the switching command according to the current state of the terminal comprises:
if a pre-set number of consecutive frames of the terminal are unimportant frames or non-key frames, issuing switching command information to the terminal; or,
if pre-set time is reached, issuing the switching command information to the terminal.

5. A channel switching device, comprising:
an information acquiring module, configured to acquire current state information of a terminal;
a state confirming module, configured to confirm a current state of the terminal according to the current state information of the terminal; and
a switching determining module, configured to determine whether to issue a switching command according to the current state of the terminal.

6. The device according to claim 5, wherein the information acquiring module is configured to acquire frame information of the current uplink and/or downlink channel of the terminal.

7. The device according to claim 6, wherein the state confirming module comprises a frame information type determining submodule and a codebook gain determining submodule;
the frame information type determining submodule is configured to confirm a type of a frame of the current uplink and/or downlink channel of the terminal, and when the frame is a voice frame, determine the frame as an important frame; and
the codebook gain determining submodule is configured to determine a magnitude of a codebook gain of voice information contained in the frame,
when the codebook gain is greater than a pre-set threshold, determine the frame as a key frame, and when the code gain is less than or equal to the pre-set threshold, determine the frame as a non-key frame.

8. The device according to claim 7, wherein the switching determining module comprises a counting submodule, a timing submodule and a judging submodule;
the counting submodule is configured to determine the number of obtained consecutive frames of the terminal;
the timing submodule is configured to determine whether pre-set time is reached; and
the judging submodule is configured to judge whether the consecutive unimportant frames or non-key frames of the terminal reach a pre-set threshold of the number of consecutive frames;
if the consecutive unimportant frames or non-key frames of the terminal reach the pre-set threshold of the number of consecutive frames, issuing switching command information to the terminal; or
if the pre-set time is reached, issuing the switching command information to the terminal.

9. A base station for channel switching, comprising the device according to any one of claims 5 to 8.

10. A computer readable storage medium, in which a computer program is stored, the computer program comprises a program instruction, and when the program instruction is executed by a device of a base station, the device can perform the method according to any one of claims 1 to 4.
